Europäisches Patentamt

(19) European Patent Office

Office européen des brevets

(11) Numéro de publication : **0 256 348 B1**

## (12) FASCICULE DE BREVET EUROPEEN

(45) Date de publication du fascicule du brevet :
02.01.91 Bulletin 91/01

(51) Int. Cl.⁵ : **G02B 26/02**

(21) Numéro de dépôt : **87110677.9**

(22) Date de dépôt : **23.07.87**

(54) **Commutateur mécanique pour fibres optiques.**

(30) Priorité : **24.07.86 FR 8610754**

(43) Date de publication de la demande :
**24.02.88 Bulletin 88/08**

(45) Mention de la délivrance du brevet :
**02.01.91 Bulletin 91/01**

(84) Etats contractants désignés :
**BE DE FR GB IT NL SE**

(56) Documents cités :
**EP-A- 0 069 185
US-A- 4 063 287
US-A- 4 337 995
ONDE ELECTRIQUE, vol. 65, no. 5, septembre
1985, pages 41-48, Argenteuil, FR; J.
THIENNOT et al.: "Transmission sur fibres
monomodes: les systèmes sous-marins"**

(56) Documents cités :
**ELECTRONICS LETTERS, vol. 16, no. 17, 14
août 1980, pages 647-648, Institution of
Electrical Engineers, Hitchin, Herts, GB; C.
DÄHNE et al.: "Bistable optical fibre switch"
PATENT ABSTRACTS OF JAPAN, vol. 4, no.
127 (P-26)[609], 6 septembre 1980; & JP-A-55
81 306
PATENT ABSTRACTS OF JAPAN, vol. 6, no.
116 (P-125)[994], 29 juin 1982; & JP-A-57 44 106**

(73) Titulaire : **ALCATEL CIT
12 Rue de la Baume
F-75008 Paris (FR)**

(72) Inventeur : **Lemonde, Jean-Louis
17, rue Pasteur
F-78150 Le Chesnay (FR)**

(74) Mandataire : **Weinmiller, Jürgen et al
Lennéstrasse 9 Postfach 24
D-8133 Feldafing (DE)**

## Description

L'invention est relative à la commutation optique destinée au domaine des télécommunications. Elle concerne plus précisément un commutateur mécanique avec un brin de fibre optique à extrémité mobile déplacée entre deux positions où elle vient en alignement avec une extrémité fixe de l'un ou l'autre de deux autres brins afin d'établir un chemin optique continu avec l'un ou l'autre de ces derniers.

Dans les premiers commutateurs optiques mécaniques tels que celui décrit par P.G. Hale et R.Kompener dans la revue Electronics letters p.388 vol 12 n°15 du 22 juillet 1976, l'extrémité mobile de la fibre optique n'était pas guidée dans sa course mais uniquement manoeuvrée au moyen d'un manchon magnétique attiré magnétiquement vers l'une ou l'autre des arêtes intérieures diamétralement opposées d'un tube à section carrée où reposaient les extrémités fixes de deux autres fibres. Dans ce genre de commutateur le manque de guidage de la fibre optique mobile ne permet pas d'obtenir les précisions d'alignement et d'écartement des fibres nécessaires à l'obtention d'un faible coefficient d'atténuation.

Depuis, d'autres types de commutateurs optiques ont été proposés dans lesquels l'extrémité mobile de fibre optique est guidée dans son mouvement par une lamelle flexible magnétisable à laquelle elle est collée soit selon une structure dérivée de celle du relais Reed comme les commutateurs décrits dans le brevet britannique n° 1 426 475 soit selon une structure dérivée de celle d'un relais électromagnétique à palette souple comme les commutateurs décrits dans la demande de brevet français n° 2 380 568.

De telles structures améliorent la précision du mouvement de l'extrémité mobile de fibre optique et le coefficient d'atténuation ainsi que sa constance dans le temps, sans pour autant permettre d'atteindre des coefficients d'atténuation de l'ordre de ceux des coupleurs à simple jonction car elles n'autorisent pas un réglage précis de l'alignement et de l'écartement des extrémités des fibres.

Pour tenter de résoudre ce problème il a été proposé, notamment dans la demande de brevet français n° 2 384 276 de guider l'extrémité mobile de fibre optique à l'aide de lamelles magnétiques souples sans la fixer à ces dernières ce qui permet un ajustement ultérieur de sa longueur et par conséquent des écartements entre l'extrémité mobile et les extrémités fixes de fibres. Cet ajustement à l'inconvénient d'être unique pour les deux positions et par conséquent de n'aboutir qu'à un compromis. En outre, le mouvement de la fibre mobile n'est plus aussi précis que lorsque son extrémité est collée.

La revue "L'onde Electrique" (Septembre 1985, Vol.65, N°5, pp.44-45) décrit les caractéristiques essentielles d'un commutateur mécanique pour fibres optiques avec un premier brin de fibre optique à extrémité mobile déplacée entre deux positions où elle vient en alignement avec une extrémité fixe d'un deuxième ou d'un troisième autre brin comportant

– une semelle rigide à faible coefficient de dilatation,
– un bras basculant rigide auquel est fixée l'extrémité mobile du premier brin, qui est articulé sur la semelle et qui bascule sous l'action de moyens d'entraînement entre deux positions de butée,
– deux plateaux fixes qui supportent chacun une extrémité fixe du deuxième ou du troisième brin et qui sont fixés rigidement à la semelle dans les prolongements des positions prises par l'extrémité mobile du premier brin lorsque le bras basculant est dans chacune de ses positions de butée.

La présente invention a pour but d'assurer un couplage lumineux avec un minimum d'atténuation dans chacune des positions du commutateur. A cet effet, chaque plateau porte une plaquette gravée d'une rainure longitudinale à section en V servant à l'alignement final des extrémités mobile et fixe des brins de fibre et est équipé d'un système de pions latéraux butant contre l'un des bords des plaquettes et assurant l'orientation parallèle des rainures dans le plan de basculement de l'extrémité mobile. La fixation des plateaux entre eux et sur la semelle est assurée d'abord de manière provisoire, par des boulons jouant dans leur logement et permettant un ajustement individuel des positions respectives des plateaux par rapport à la semelle puis, de manière définitive, par soudure par points au laser.

D'autres caractéristiques et avantages de l'invention ressortiront de la description ci-après d'un mode de réalisation donné à titre d'exemple. Cette description sera faite en regard du dessin dans lequel :

– la figure 1 est un schéma de principe de la structure adoptée pour un commutateur mécanique à fibre optique selon l'invention,
– la figure 2 est une vue en coupe longitudinale et verticale d'un commutateur selon l'invention,
– la figure 3 est une vue de dessus du commutateur de la figure 2 représenté partiellement démonté,
– la figure 4 est une vue partielle d'une tranche de silicium d'où sont tirées des plaquettes à rainures en V assurant dans le commutateur les alignements finaux des extrémités mobile et fixe des fibres optiques,
– la figure 5 est une vue en perspective d'un plateau supportant une plaquette représentée à la figure précédente,
– la figure 6 illustre le mode d'assemblage des extrémités fixes de fibres optiques du commutateur sur deux plateaux tels que celui représenté à la figure précédente et
– la figure 7 est une vue en perspective qui détaille le montage face à face des plateaux supportant les extrémités fixes de fibres optiques.

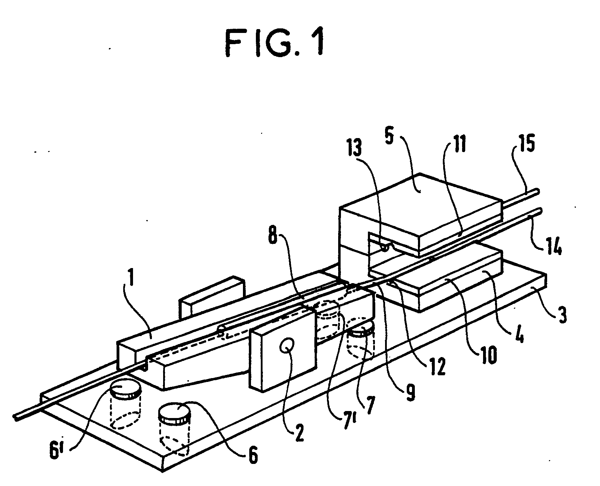

La figure 1 illustre le principe de la structure d'un commutateur selon l'invention et ne respecte pas, dans un souci de simplification, les formes exactes des différents éléments du commutateur qui seront décrites ultérieurement en détail vis-à-vis des autres figures.

La structure de principe retenue est celle d'un bras rigide 1 monté basculant autour d'un axe transversal 2 sur une semelle rigide 3 face à deux plateaux superposés 4 et 5.

Le bras rigide 1 bascule dans un plan perpendiculaire à la semelle 3. Il est en métal magnétique et attiré magnétiquement dans l'une ou l'autre de ses positions de basculement grâce à un champ magnétique extérieur au commutateur agissant par l'intermédiaire de paires de conduits magnétiques 6, 6' et 7, 7' disposés de part et d'autre de l'axe de basculement 2 au travers de la semelle 3 qui est en un métal non magnétique. Il porte à son extrémité tournée vers les plateaux superposés 4 et 5 un tube capillaire 8 dans lequel est fixée une extrémité mobile 9 de fibre optique qui se déplace entre les plateaux 4 et 5 au gré du basculement du bras 1.

Les moyens d'entraînement du bras 1, non représentés, peuvent être par exemple un aimant déplaçable des conduits 6, 6' aux conduits 7, 7' ou des bobines électromagnétiques couplées à ces conduits.

Les deux plateaux 4 et 5 superposés face à face portent chacun une plaquette 10, 11 creusée d'une rainure d'alignement 12, 13 dans laquelle aboutit une extrémité fixe 14, 15 de fibre optique.

L'extrémité mobile 9 de fibre optique vient dans chacune des positions de basculement du bras rigide 1 dans la rainure d'alignement 12 ou 13 de l'une des plaquettes 10 ou 11 dans le prolongement de l'extrémité fixe 14 ou 15 de fibre optique qui s'y trouve déjà pour établir avec elle un chemin optique continu.

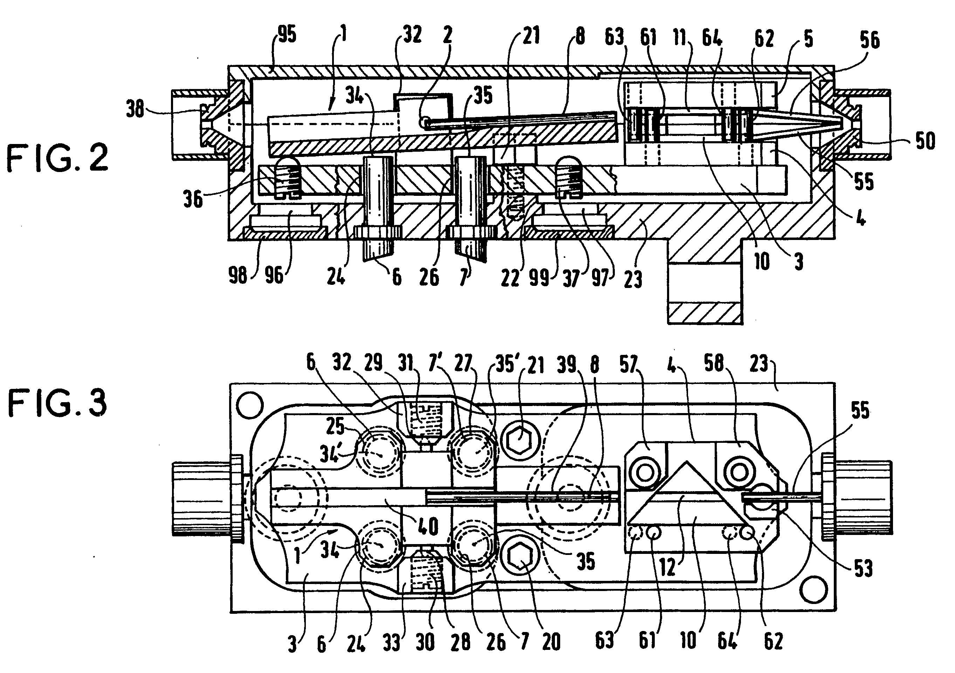

Les formes et dispositions des différents éléments du commutateur apparaissent de façon précise aux figures 2 et 3 dans lesquelles les fibres optiques n'ont pas été représentées pour une meilleure clarté.

La semelle rigide 3 qui sert de socle au commutateur est en métal non magnétique à très faible coefficient de dilatation pour limiter au maximum les variations des écarts résiduels subsistant dans les alignements de l'extrémité mobile de fibre optique avec les extrémités fixes de fibre optique. Elle est enfermée avec le bras rigide basculant 1 et les plateaux 4 et 5 dans un boîtier de protection non magnétique et étanche rempli d'un liquide d'indice diminuant le coefficient d'atténuation de la voie passante du commutateur. Pour lui éviter le maximum de contraintes extérieures, la semelle 3 est éloignée des parois internes du boîtier, fixée par des vis 20 et 21 sur une nervure médiane 22 en relief sur le fond 23 du boîtier et percée d'ouvertures 24, 25, 26, 27 laissant un passage avec jeu aux paires de shunts magnétiques 6, 6' et 7, 7' qui traversent de manière étanche le fond 23 du boîtier.

Le bras basculant 1 est en métal magnétique à partie centrale élargie supportant un axe transversal fixe de rotation 2 parallèle à la surface de la semelle 3 dont les extrémités 28, 29 tourillonnent dans des crapaudines 30, 31 vissées en regard dans les flancs 32, 33 d'un étrier que comporte la semelle 3 et présentant, de part et d'autre de l'axe 2, des surfaces d'attraction magnétique 34, 34', 35, 35' venant en regard des extrémités des paires de shunts magnétiques 6, 6' et 7, 7'. Il bute dans l'une ou l'autre de ses positions de basculement sur des vis de réglage 36, 37 placées dans la semelle 3 en regard de chacune de ses extrémités.

La face supérieure du bras basculant 1, opposée à la semelle 3, présente une rainure médiane longitudinale servant de passage à l'extrémité mobile de fibre optique qui pénètre à l'intérieur du commutateur par une traversée étanche 38 placée sur une paroi latérale du boîtier, dans le prolongement du bras basculant 1, à la même hauteur par rapport à la semelle 3 que l'axe de rotation 2. La partie 39 de la rainure médiane longitudinale du bras basculant 1 tournée vers les plateaux 4 et 5 sert de logement au tube capillaire 8 maintenant l'extrémité mobile de fibre optique tandis que l'autre partie 40 dégage l'espace nécessaire au débattement de la portion correspondante, non fixée au bras 1, de l'extrémité mobile de fibre optique lors des mouvements du bras basculant 1.

Les deux plateaux 4 et 5 qui supportent les extrémités fixes de fibres optiques sont placés sur la semelle 3, dans le prolongement du bras basculant 1, superposés face à face de part et d'autre d'un plan médian, parallèle à la semelle 3, à la hauteur duquel se situe l'axe de rotation 2 du bras basculant 1, la traversée étanche de boîtier 38 utilisée pour le passage de la fibre optique dont l'extrémité est mobile et une autre traversée étanche de boîtier 50 placée en vis-à-vis et utilisée pour le passage des deux fibres optiques dont les extrémités sont fixes.

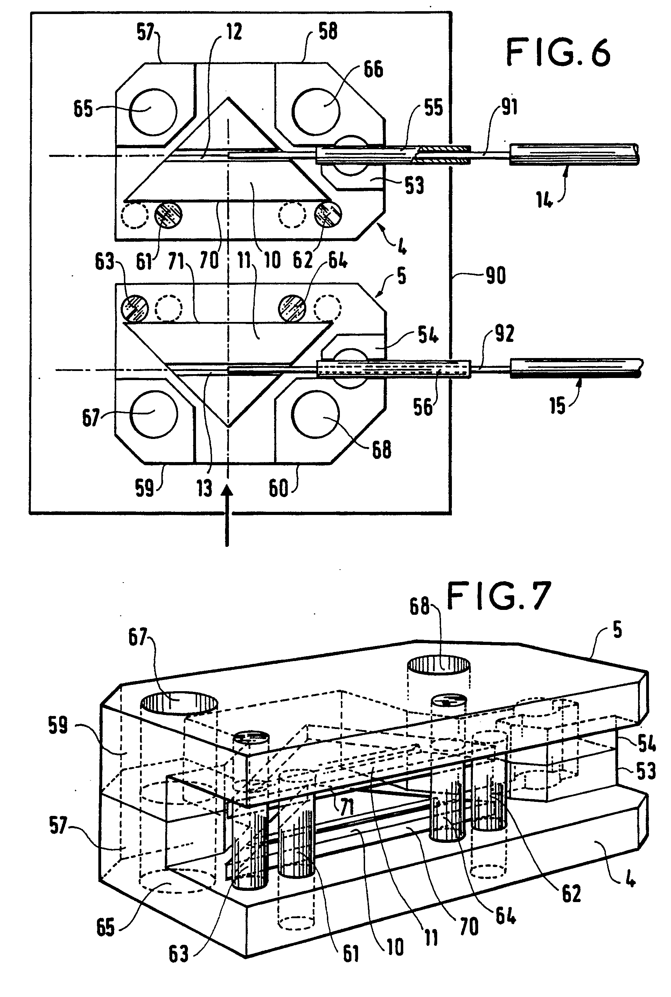

Comme cela apparaît plus clairement aux figures 6 et 7, les deux plateaux 4 et 5 ont des formes symétriques qui se déduisent l'une de l'autre par retournement. Leur surface plane qui supporte une plaquette 10 ou 11 à rainure longitudinale assurant l'alignement final des extrémités des fibres optiques est bordée, sur le côté arrière opposé au bras basculant 1, d'un plot d'ancrage 53 ou 54 pour tube capillaire 55 ou 56 servant à la fixation sur les plateaux 4, 5 des extrémités fixes 14, 15 de fibre optique, sur un premier côté latéral parallèle au plan de basculement du bras 1, de deux colonnettes 57, 58 respectivement 59, 60 servant d'entretoises lorsque les deux plateaux 4 et 5 sont superposés face à face et sur un deuxième côté latéral opposé au premier, de deux pions de centrage 61, 62 repectivement 63, 64 servant au positionnement des plaquettes 10, 11.

Lors de la superposition face à face des plateaux 4 et 5, les colonnettes 57, 58, 59, 60 prennent appui l'une sur l'autre et ménagent entre les plateaux 4 et 5 un espace balayé par le bout de l'extrémité mobile 9 de fibre optique lorsqu'il passe de la rainure longitudinale d'une plaquette 10 ou 11 à l'autre au cours d'un basculement du bras du commutateur. L'écartement entre les plateaux 4, 5 est de l'ordre de la hauteur de débattement de l'extrémité du bras basculant 1 leur faisant face. Les colonnettes 57, 58, 59, 60 sont creuses, percées d'ouvertures 65, 66, 67, 68 qui se correspondent lorsque les plateaux 4 et 5 sont superposés face à face et laissent un passage avec jeu à des boulons non représentés permettant une fixation provisoire des plateaux 4 et 5 entre eux et à la semelle 3 avant leur positionnement précis.

Les paires de pions de centrage 61, 62 et 63, 64 sont décalées d'un plateau 4, 5 à l'autre et placées de manière à s'aligner lors de la superposition face à face des plateaux 4 et 5 et à définir une surface de référence de positionnement commune aux deux plaquettes 10, 11.

Les plaquettes 10, 11 sont des pastilles de silicium de forme triangulaire dont un des bords 70, 71 vient s'appliquer contre les pions de centrage 61, 62, 63, 64 et qui comportent parallèlement et à même distance de ce bord la rainure rectiligne 12, 13 à section en V assurant l'alignement final de l'extrémité mobile 9 de fibre optique avec chacune des extrémités fixes 14, 15. Ces rainures rectilignes 12, 13 à section en V sont obtenues de manière connue par gravure d'une tranche de silicium selon le plan d'orientation cristallin 1-0-0.

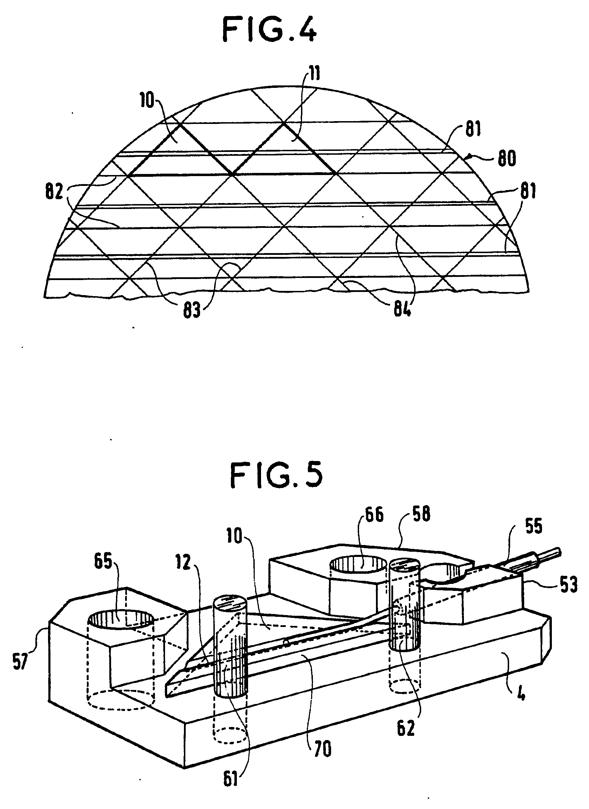

La figure 4 illustre la fabrication des plaquettes 10, 11. Elles sont tirées d'une tranche de silicium 80 gravée de rainures parallèles à section en V 81 par découpage selon trois réseaux de traits parallèles : un premier 82 parallèle aux rainures 81 et de même écartement que ces dernières et deux autres 83, 84 orthogonaux entre eux coupant les rainures 81 à 45°. Les deux plaquettes 10, 11 d'un même commutateur sont choisies le long d'une même rainure 81 de la tranche 80, côte à côte par rapport à l'une des lignes de découpage parallèle à ladite rainure de manière à avoir pour les deux plaquettes la même distance, avec la meilleure précision possible, entre la rainure 12, 13 et le bord 70, 71 qui lui est parallèle venant au contact des pions de centrage 61, 62 ou 63, 64.

L'assemblage du commutateur commence par le montage des plaquettes de silicium 10, 11 et des tubes capillaires 55, 56 sur les plateaux 4 et 5.

Au cours de cette opération, les plaquettes de silicium sont soudées sur les plateaux 4 et 5 avec leurs bords 70, 71 parallèles aux rainures longitudinales 12, 13 plaqués contre la paire de pions de centrage 61, 62 ou 63, 64 tandis que les tubes capillaires 55, 56, par exemple en quartz doré, sont soudés par une extrémité dans leurs plots respectifs d'ancrage 53, 54 avec une inclinaison permettant une bonne application des extrémités de fibres dans les rainures 12, 13.

Les plateaux 4 et 5 supportant les plaquettes 10, 11 et tubes capillaires 55, 56, sont ensuite équipés de deux brins de fibres optique constituant les deux extrémités fixes 14, 15 de fibre optique. Pour ce faire, ils sont, comme illustré sur la figure 6, disposés côte à côte sur un plateau gabarit 90 permettant un réglage par visée optique, de la longueur d'application des extrémités de fibres dans les rainures. Un bout de chaque brin de fibre optique 91, 92 dont la gaine a été retirée sur une certaine longueur et la section d'extrémité préparée selon les techniques habituelles de couplage de fibres optiques est encollé et enfilé dans le tube capillaire 55, 56 jusqu'à ce qu'il parvienne dans la rainure d'alignement à peu près à mi-longueur, face à la flèche schématisant une visée optique permettant une égalisation déjà précise des futurs écartements entre les extrémités alignées des fibres mobile et fixes.

La semelle 3 est alors équipée du bras basculant 1 dont l'axe de pivotement est monté les crapaudines 30, 31 et du plateau 4 fixé provisoirement à la semelle 3 par boulonnage. Un brin de fibre optique constituant l'extrémité mobile 9 de fibre optique est dénudé à un bout avec une section d'extrémité préparée pour un couplage de fibre, encollé, enfilé dans le tube capillaire 8 du bras basculant abaissé sur le plateau inférieur 4 et ajusté en longueur pour venir dans la rainure 12 du plateau inférieur 4 à proximité immédiate de l'extrémité fixe de fibre optique qui s'y trouve. Une fois la colle prise et l'extrémité mobile 9 de fibre optique fixée au bras basculant 1, les réglages de l'alignement et de l'écartement des fibres sont repris par déplacement du plateau 4 dont le boulonnage à la semelle 3 n'assure que la friction suffisante pour conserver une position de réglage. Le plateau inférieur 4 est tout d'abord saisi entre les pinces d'un micromanipulateur puis déplacé par rapport à la semelle 3, pour parvenir à un alignement précis de l'extrémité mobile de fibre optique 9 dépassant du bras basculant 1 avec l'extrémité fixe de fibre se trouvant sur la plaquette 10 du plateau inférieur 4 ainsi qu'à un écartement entre ces dernières de l'ordre du quart de leur diamètre. Ce réglage effectué sous le contrôle d'un appareil de mesure de coefficient d'atténuation est alors figé en procédant à une soudure par points au laser du plateau inférieur 4 sur la semelle 3. Le plateau supérieur 5 est ensuite placé par rapport au plateau inférieur 4 de manière que le bord 71 de sa plaquette 11 vienne s'aligner contre la paire de plots de centrage 61, 62 du plateau inférieur 4 et ses plots de centrage 63, 64 contre le bord 70 de la plaquette 10 du plateau inférieur 4, ce qui assure l'alignement des rainures 12, 13 des deux plaquettes dans le plan de basculement de l'extrémité mobile 9 de fibre optique et est fixé provisoirement par boulonnage. Puis, à l'aide d'un micromanipulateur il est éloigné ou rapproché du bras basculant 1 alors relevé pour ajuster l'écartement de l'extrémité mobile 9 de fibre optique avec l'extrémité fixe de fibre se trouvant sur la plaquette du plateau supérieur 5. Ce réglage également effectué sous le contrôle d'un appareil de mesure de coefficient d'atténuation est ensuite figé en procédant à une soudure par points au laser du plateau 5 sur le plateau 4. Les boulons ayant servi à la fixation provisoire des plateaux 4 et 5 peuvent alors être retirés.

La semelle 3 est ensuite montée dans le fond 23 du boîtier, un couvercle 95 (figure 2) soudé et les traversées étanches 38 et 50 mises en place. Le liquide d'indice est alors injecté par des orifices 96, 97 percés dans le fond 23 du boîtier au droit des vis de réglage 36 et 37. Ces orifices sont ensuite obturés par des opercules 98 et 99.

Cette structure de commutateur, grâce aux possibilités de réglage qu'elle procure, permet d'obtenir pour chaque voie un coefficient d'atténuation de l'ordre de 0,7 dB avec en outre une excellente reproductibilité due au guidage très précis de l'extrémité mobile de la fibre optique.

On peut, sans sortir du cadre de l'invention modifier certaines dispositions ou remplacer certains moyens par des moyens équivalents.

## Revendications

1. Commutateur mécanique pour fibres optiques avec un premier brin de fibre optique à extrémité mobile (9) déplacée entre deux positions où elle vient en alignement avec une extrémité fixe (14, 15) d'un deuxième ou d'un troisième brin afin d'établir un chemin optique continu avec l'une ou l'autre de ces derniers, comportant

   – une semelle (3) rigide à faible coefficient de dilatation,

   – un bras rigide basculant (1) auquel est fixé l'extrémité mobile (9) du premier brin, qui est articulé sur la semelle (3) et qui bascule, sous l'action de moyens d'entraînement entre deux positions de butée et

   – deux plateaux fixes (4, 5) qui supportent chacun une extrémité fixe (14, 15) du deuxième ou du troisième brin et qui sont fixés rigidement à la semelle (3) dans le prolongement des positions prises par l'extrémité mobile (9) du premier brin lorsque le bras basculant (1) est dans chacune de ses positions de butée, caractérisé en ce que les plateaux supportent deux plaquettes identiques (10, 11) qui sont gravées d'une rainure longitudinale (12, 13) à section en V servant à l'alignement précis des extrémités mobile (9) et fixes (14, 15) de fibre lorsqu'elles sont mises en regard l'une de l'autre et dont un bord rectiligne (70, 71) est parallèle à la rainure longitudinale (12, 13), et en ce qu'ils comportent chacun une paire de pions latéraux (61, 62, 63, 64) qui sont en butée d'une part contre le bord rectiligne de la plaquette supportée par le plateau considéré et d'autre part contre le bord rectiligne de l'autre plaquette lorsque l'autre plateau est monté face à face, cela de manière à assurer l'alignement des rainures longitudinales (12, 13) des deux plaquettes dans le plan de basculement de l'extrémité mobile (9) du premier brin de fibre optique.

2. Commutateur selon la revendication 1, caractérisé en ce que les deux plaquettes (10, 11) montées sur les deux plateaux (4, 5) sont extraites d'une tranche de silicium (80) gravée de rainures parallèles (81) puis découpée, selon un réseau de traits (82) parallèles aux rainures (81), en bandes parallèles elles mêmes fractionnées par découpage selon d'autres réseaux de traits (83, 84), les deux plaquettes (10, 11) d'un même commutateur étant choisies sur la dite tranche (80) le long d'une même rainure (81), côte à côte par rapport à une ligne de découpage parallèle à la rainure considérée.

3. Commutateur selon la revendication 1, caractérisé en ce que les deux plateaux (4, 5) sont de formes symétriques et pourvus de colonnettes latérales creuses (57, 58, 59, 60) formant entretoise lorsque les deux plateaux (4, 5) sont superposés et laissant, lors du montage du commutateur, un passage avec jeu latéral à des boulons assurant une fixation provisoire des plateaux (4, 5) entre eux et à la semelle (3), le jeu latéral permettant de déplacer le plateau inférieur (4) par rapport à la semelle (3) pour un réglage précis de son alignement et de l'écartement entre extrémités fixe (14) et mobile (9) de fibre à l'aide d'un micromanipulateur et d'une mesure d'atténuation avant la fixation définitive du plateau inférieur (4) grâce à un soudage par points au laser puis le déplacement du plateau supérieur (5) par rapport au plateau inférieur (4) pour un réglage précis de son alignement et de l'écartement entre extrémités fixe (15) et mobile (9) de fibre à l'aide d'un micromanipulateur et d'une mesure d'atténuation avant sa fixation définitive au plateau inférieur (4) grâce à un soudage par points au laser.

4. Commutateur selon la revendication 1, caractérisé en ce que lesdits plateaux (4, 5) sont pourvus dans le prolongement des rainures longitudinales (12, 13) de leurs plaquettes (10, 11) de plots d'ancrage (53, 54) pour des tubes capillaires (55, 56) servant de colliers de blocage aux deuxième et troisième brins de fibre dont les extrémités fixes (14, 15) aboutissent dans lesdites rainures longitudinales (12, 13).

5. Commutateur selon la revendication 1, caractérisé en ce qu'il comporte un tube capillaire (8) qui est monté sur le bras basculant (1) et sert de collier de blocage à l'extrémité mobile (9) du premier brin de fibre optique.

6. Commutateur selon la revendication 1, caractérisé en ce que le bras basculant (1), articulé à la semelle (3) dans sa partie médiane, a son débattement limité par des vis de réglage de butée (36, 37) vissées dans la semelle (3) en regard de ses extrémités.

7. Commutateur selon la revendication 1, à entraînement magnétique caractérisé en ce que le bras basculant (1) est une pièce magnétigue et la semelle (3) une pièce non magnétique traversée par des shunts magnétiques (6, 6', 7, 7') disposés de part et d'autre de l'articulation du bras basculant (1) à la semelle (3).

8. Commutateur selon la revendication 1, caractérisé en ce que ladite semelle (3) est fixée sur une nervure médiane (22) en relief sur le fond (23) d'un boîtier de protection tout en restant éloignée des parois internes de ce boîtier afin d'éviter les contraintes mécaniques extérieures.

## Ansprüche

1. Mechanischer Umschalter für Lichtleitfasern mit einer ersten Lichtleitfaserader, deren eines Ende (9) zwischen zwei Positionen beweglich ist, bei denen sie sich in Flucht zu einem festen Ende (14, 15) einer zweiten bzw. dritten Ader befindet, um einen kontinuierlichen optischen Pfad mit der einen oder der anderen Ader herzustellen,
   – mit einer starren Bodenplatte (3), deren Ausdehnungskoeffizient gering ist,
   – mit einem starren Kipparm (1), auf dem das bewegliche Ende (9) der ersten Ader befestigt ist, der auf der Bodenplatte (3) kippbar gelagert ist und aufgrund der Wirkung eines Antriebsmittels zwischen zwei Endstellungen hin- und hergekippt werden kann,
   – und mit zwei ortsfesten Platten (4, 5), die ein festes Ende (14, 15) der zweiten bzw. der dritten Ader tragen und starr auf der Bodenplatte (3) in der Verlängerung der vom beweglichen Ende (9) der ersten Ader eingenommenen Stellungen befestigt sind, wenn der Kipparm (1) sich in einer seiner Endstellungen befindet, dadurch gekennzeichnet, daß die Platten zwei gleiche Richtplättchen (10, 11) tragen, in die eine im Querschnitt V-förmige Längsrinne (12, 13) eingraviert ist, die der genauen Ausrichtung der beweglichen (9) und der festen Faserenden (14, 15) dienen, wenn sie in fluchtende Stellung zueinander gebracht werden, wobei je ein geradliniger Rand (70, 71) der Richtplättchen parallel zur Längsrinne (12, 13) verläuft, und daß jede ortsfeste Platte ein Paar seitlicher Stifte (61, 62, 63, 64) aufweist, die einerseits gegen den geradlinigen Rand des von der betrachteten Platte getragenen Richtplättchens und andererseits gegen den geradlinigen Rand des anderen Richtplättchens anliegen, wenn die andere Platte der ersteren gegenüber montiert ist, derart, daß sich eine fluchtende Ausrichtung der Längsrinnen (12, 13) der beiden Platten in der Kippebene des beweglichen Endes (9) der ersten Lichtleitfaserader ergibt.

2. Umschalter nach Anspruch 1, dadurch gekennzeichnet, daß die beiden auf den beiden Platten (4, 5) montierten Richtplättchen (10, 11) aus einer Siliziumscheibe (80) entnommen sind, in die parallele Rinnen (81) eingraviert sind und die dann gemäß einem Netzwerk von zu den Rinnen (81) parallelen Linien (82) in parallele Bänder zerschnitten wurde, die ihrerseits gemäß anderen Netzwerken von Linien (83, 84) zerschnitten wurden, wobei die beiden Richtplättchen (10, 11) eines gemeinsamen Umschalters aus derselben Siliziumscheibe (80) entlang einer gleichen Rinne (81) Seite an Seite bezüglich einer zur betrachteten Rinne parallelen Schnittlinie ausgewählt sind.

3. Umschalter nach Anspruch 1, dadurch gekennzeichnet, daß die beiden Platten (4, 5) eine symmetrische Form besitzen und mit hohlen seitlichen Abstandssäulen (57, 58, 59, 60) versehen sind, die die beiden Platten (4, 5) auf Abstand halten und während der Montage des Umschalters einen Durchlaß mit seitlichem Spiel für Bolzen lassen, die eine provisorische Befestigung der Platten (4, 5) zueinander und zur Bodenplatte (3) bewirken, wobei das seitliche Spiel eine Verschiebung der unteren Platte (4) bezüglich der Bodenplatte (3) zur genauen Einstellung ihrer fluchtenden Lage und des Abstands zwischen dem festen (14) und dem beweglichen Faserende (9) mit Hilfe eines Mikromanipulators und einer Dämpfungsmessung, ehe die untere Platte mit Hilfe einer Laserpunktschweißung endgültig befestigt wird, und dann die Verschiebung der oberen Platte (5) bezüglich der unteren Platte (4) zur genauen Einstellung ihrer fluchtenden Lage und des Abstands zwischen dem festen (15) und dem beweglichen Faserenden (9) mit Hilfe eines Mikromanipulators und einer Dämpfungsmessung erlaubt, ehe die end gültige Befestigung der oberen Platte auf der unteren Platte (4) mit Hilfe einer Laserpunktschweißung erfolgt.

4. Umschalter nach Anspruch 1, dadurch gekennzeichnet, daß die Platten (4, 5) in der Verlängerung der Längsrinnen (12, 13) in ihren Richtplättchen (10, 11) Verankerungsstützen (53, 54) für Kapillarröhrchen (55, 56) besitzen, die als Blockierkragen für die zweite und die dritte Lichtleitfaserader dienen, deren feste Enden (14, 15) in den Längsrinnen (12, 13) enden.

5. Umschalter nach Anspruch 1, dadurch gekennzeichnet, daß er ein Kapillarröhrchen (8) aufweist, das auf dem Kipparm (1) montiert ist und als Blockierkragen für das bewegliche Ende (9) der ersten Lichtleitfaserader dient.

6. Umschalter nach Anspruch 1, dadurch gekennzeichnet, daß der Kipparm (1), der auf der Bodenplatte (3) in deren mittleren Bereich kippbar gelagert ist, in seiner Kippbewegung durch einstellbare Anschlagschrauben (36, 37) begrenzt ist, die in die Bodenplatte (3) gegenüber den Enden des Kipparms eingeschraubt sind.

7. Umschalter nach Anspruch 1 mit Magnetantrieb, dadurch gekennzeichnet, daß der Kipparm (1) ein magnetisches Bauteil und die Bodenplatte (3) ein unmagnetisches Bauteil ist, durch das Magnetpole (6, 6', 7, 7') zu beiden Seiten des Kippgelenks des Kipparms (1) hindurch verlaufen.

8. Umschalter nach Anspruch 1, dadurch gekennzeichnet, daß die Bodenplatte (3) auf einer Mittelrippe (22) befestigt ist, die vom Boden (23) eines Schutzgehäuses vorsteht und dabei von den Innenwänden dieses Gehäuses einen Abstand einhält, um äußere mechanische Belastungseinflüsse zu vermeiden.

## Claims

1. A mechanical switch for optical fibers comprising a first optical fiber strand having a moving end (9) which is displacable between two positions when this strand comes into alignment with a fixed end (14, 25) of a second or a third strand respectively in order to establish a continous optical path therewith, the switch comprising

- a rigid sole plate (3) having a low expansion coefficient,
- a rigid rocker arm (1) to which the moving end (9) of the first strand is fixed, which is pivotely mounted on the sole plate (3) and which, under the action of drive means, tilts between two abutment positions, and
- two fixed slabs (4, 5), each supporting one fixed end (14, 15) of the second and the third strand respectively, said slabs being rigidly fixed to the sole plate (3) in alignment with the positions taken up by the moving end (9) of the first strand when the rocker arm (1) is in each of its abutment positions, characterized in that the slabs support two identical platelets (10, 11) into which longitudinal V-section grooves (12, 13) is engraved for accurately aligning the moving fiber end (9) and the fixed fiber ends (14, 15) when said ends are placed end-to-end, each of said platelets having a rectilinear edge (70, 71) which is parallel to the longitudinal groove (12, 143), and that the slabs each include a pair of side pegs (61, 62, 63, 64) which come into abutment firstly against the rectilinear edge of the platelet supported by the respective slab and secondly against the rectilinear edge of the other platelet when the other slab is mounted face to face, thereby ensuring that the longitudinal grooves (12, 13) of the two platelets are in alignment in the rocking plane of the moving end (9) of the first optical fiber strand.

2. A switch according to claim 1, characterized in that the two platelets (10,11) mounted on the two slabs (4, 5) are taken from a silicon wafer (80) which is edged with parallel grooves (81) and then cut up along a set of lines (82) parallel to the grooves (81) into parallel strips which are themselves cut along other sets of lines (83, 84), the two platelets (10, 11) of a single switch being selected on said wafer (80) along the same groove (81) side by side with respect to a cut line which is parallel to the related groove.

3. A switch according to claim 1, characterized in that the two slabs (4, 5) are symmetrical in shape and are provided with hollow side columns (57, 58, 59, 60) constituting spacers when the two slabs (4, 5) are superposed and leaving passages with lateral clearance while the switch is being assembled for receiving bolts to provide temporary securing of the slabs (4, 5) and the sole plate (3), the lateral clearance allowing the bottom slab (4) to be moved relative to the sole plate (3) in order to accurately adjust its alignment and the gap between the fixed fiber end (14) and the moving fiber end (9) by means of a micro-manipulator and of an attenuation measurement prior to finally fixing the bottom slab (4) to the sole plate (3) by laser spot welding, and then allowing the top slab (5) to be moved with respect to the bottom slab (4) in order to accurately adjust the alignment and the gap between the fixed fiber end (15) and the moving fiber end (9) by means of a micro-manipulator and an attenuation measurement prior to finally fixing the top slab to the bottom slab (4) by laser spot welding.

4. A switch according to claim 1, characterized in that said slabs (4, 5) are provided with retaining blocks (53, 54) in alignment with the longitudinal grooves (12, 13) of their platelets (10, 11) for retaining capillary tubes (55, 56) serving as retaining collars for the second and third fiber strands respectively, whose fixed ends (14, 15) are received in these longitudinal grooves (12, 13).

5. A switch according to claim 1, characterized in that it comprises a capillary tube (8) which is mounted on the rocker arm (1) and which serves as a retaining collar for the moving end (9) of the first optical fiber strand.

6. A switch according to claim 1, characterized in that the rocker arm (1) which is pivotely mounted on the sole plate (3) in its middle part is provided with abutment adjusting screws (36, 37) through the sole plate (3) level with the rocker ends in order to restrict the rocking movement.

7. A switch according to claim 1, including a magnetic rocker drive, characterized in that the rocker arm (1) is a magnetic component and the sole plate (3) is a non-magnetic component which is passed through by magnetic ducts (6, 6', 7, 7') disposed on either side of the rocker arm (1) pivot.

8. A switch according to claim 1, characterized in that said sole plate (3) is fixed on a middle ridge (22) projecting from the bottom (23) of a protective housing and does not reach the inside walls of said housing in order to avoid external mechanical stresses to be transferred thereto.

# FIG. 1

EP 0 256 348 B1

FIG. 2

FIG. 3

9

# FIG.4

# FIG.5

FIG.6

FIG.7